# EUROPEAN PATENT SPECIFICATION

(11) **EP 1 880 909 B1**
(45) Date of publication and mention of the grant of the patent: **04.03.2009**
(21) Application number: 07012738.6
(22) Date of filing: 28.06.2007
(51) Int. Cl.: B60R 22/46

(54) **Seat belt retractor and seat belt apparatus**
Sicherheitsgurtaufroller und Sicherheitsgurtvorrichtung
Rétracteur de ceinture de sécurité et appareil de ceinture de sécurité

(30) Priority: 19.07.2006 JP 2006197316
(43) Date of publication of application: 23.01.2008
(73) Proprietor: TAKATA CORPORATION, Minato-ku, Tokyo 106-8510 (JP)
(72) Inventor: Hiramatsu, Koji, Tokyo 106-8510 (JP); Kanamori, Yasushi, Tokyo 106-8510 (JP); Shiotani, Masahiro, Tokyo 106-8510 (JP); Morimoto, Miwa, Tokyo 106-8510 (JP)
(74) Representative: Banzer, Hans-Jörg

(56) References cited:
- EP-A- 1 477 377
- WO-A-03/082640
- DE-A1- 19 609 524
- DE-A1-4102004 007 82
- DE-U1- 29 605 200
- JP-A- 2002 120 693

## Description

### Technical Field

The present invention relates to a seat belt retractor for a seat belt, and more specifically to a seat belt retractor including an EA mechanism that absorbs energy of inertia applied to an occupant when movement of the occupant is restrained by locking the seat belt when in emergency, and a seat belt apparatus including the same.

### Background Art

A seat belt apparatus provided in a seat of a motor vehicle restrains quick movement of an occupant due to acceleration occurred in collision of the motor vehicle, and is a requisite apparatus as an apparatus being aimed at safety of an occupant's body.

The seat belt apparatus is generally composed of a seat belt (webbing), seat belt retractor, and a buckle device.

The retractor winds up the seat belt around a winding member (spool), pulls the seat belt into inside thereof with spring force, and ordinarily houses the seat belt in a condition of being pulled into inside. When the occupant wears the seat belt, the aforementioned housed seat belt is withdrawn from the retractor by pulling a tongue plate provided at an end of a side opposite to a retracting-side of the seat belt. Then, the seat belt is worn by latching the tongue plate onto the aforementioned buckle device provided by the side of the seat.

In the thus constructed retractor, the seat belt is locked to be withdrawn from the winding member in collision when a shock is applied, and the occupant's body that is quickly moving forward is restrained by the locked seat belt. Currently, since the occupant's body is further strongly restrained specifically at a time of rapid deceleration of the motor vehicle or the like, a pre-tensioner and a locking mechanism are provided in general.

The pretensioner removes looseness of the seat belt when an acceleration sensor detects that the motor vehicle is brought to a condition of rapid deceleration, and thereby improves restraining force generated by the seat belt. In the pre-tensioner, there are, for example, a system where the looseness of the seat belt is removed by contraction of an entire length in a longitudinal direction of an expanding structure by expansion of a bag-shaped body caused by generating gas from a gas-generating device corresponding to a detecting signal of the aforementioned acceleration sensor, a system where the looseness of the seat belt is removed by sliding a piston inside a cylinder by the gas from the gas-generating device, and thereby rotating the spool in a seat belt retracting direction via a pinion, or the like.

The locking mechanism is provided with a locking member (locking base) that rotates together with the spool. Further, in the locking mechanism, a hooking member (pawl) provided in the locking base is hooked on an inner tooth (latchet tooth) provided in a fixing side member of the motor vehicle (a frame of the retractor or the like) corresponding to the detecting signal of the aforementioned acceleration sensor. Thereby, a rotation of the locking base and the spool in a seat belt withdrawal direction is limited.

On the other hand, when forward movement of the occupant is quickly restrained at the time of rapid deceleration of the motor vehicle or the like as described above, impactive force caused by a reaction of restraining the occupant's body is affected on a chest portion of the occupant or the like via the seat belt. A mechanism (Energy Absorption, hereinafter appropriately called as "EA mechanism") where a predetermined tension load of the seat belt is held while applying an unreeling resistance to the seat belt at a predetermined strength or more just after the seat belt is locked, so as to ease up the impactive force affected on the occupant, and in this condition, the seat belt is unreeled within a predetermined length, and thereby energy of collision affected on the occupant is absorbed, is already known.

In this method, a shaft (torsion bar) capable of being plastically deformed is disposed inside the aforementioned spool that winds up the seat belt. At this moment, one side of the torsion bar is connected to a spool side and the other side thereof is connected to a locking base side. Further, when the locking base is locked so as not to be rotatable by the aforementioned locking mechanism at the time of the rapid deceleration of the motor vehicle occurring in an emergency or the like, tension force of the seat belt restraining the occupant that moves forward by inertia force serves as relative rotation force in the withdrawal direction of the seat belt of one side of the torsion bar against the other side. When the relative rotation force reaches a certain value or more, the torsion bar is plastically deformed and the energy of collision is absorbed by a resistance of a plastic deformation at this time. Thereby, regardless of that the locking mechanism is in effect, the spool gradually rotates in the seat belt withdrawal direction, the seat belt is unreeled while receiving the tension force of a certain value or more, and the force affected between the seat belt and the occupant's body is eased up.

Here, as described in the generic Japanese Unexamined Patent Application Publication No. 2002-120693, for example, in the seat belt retractor provided with the pre-tensioner, the locking mechanism, and the EA mechanism as described above, when a slight rotation of the spool in the seat belt withdrawal direction is allowed as described above when the EA mechanism is operated, the pre-tensioner is connected with the spool in a rotating connection and is already operating in the seat belt retracting direction (namely, in a reverse direction), as described above.

### Problems to be Solved by the Invention

However, in the aforementioned heretofore known technology, a below mentioned problem exists.

That is, on the condition that a construction is made in which one side portion to be connected to a torsion bar in a spool is connected to a pre-tensioner, and a locking base to be locked by means of a locking mechanism is connected to the other side of the torsion bar, and even when the locking mechanism locks a rotation in a retracting direction of the other side of the torsion bar after the pre-tensioner is operated in the retracting direction of the spool as described above, and when one side of the torsion bar performs a relative rotation while being twisted against the other side by means of an EA mechanism, an operation of the aforementioned pre-tensioner is performed in a reverse direction to a direction of a relative rotation thereof, and the operation of the pre-tensioner affects to block the relative rotation. Namely, the operation of the EA mechanism receives an influence of the operation of the aforementioned pre-tensioner. This results in being difficult to secure a stable operation.

An object of the present invention is to provide a seat belt retractor capable of securing a stable EA operation without receiving the influence of the operation of the pre-tensioner, and a seat belt apparatus using the same.

### Means for Solving the Problems

According to the present invention, this object is achieved by a seat belt retractor as defined in Claim 1 and a seat belt apparatus as defined in Claim 8. The dependent claims define preferred and advantageous embodiments of the invention.

So as to achieve the aforementioned object, a first aspect of the invention is characterized in including a spool for retracting a seat belt, a torsion bar disposed inside in a radial direction of the spool, in which one side in an axial direction thereof is connected to the spool, and configured to be capable of absorbing energy of movement of an occupant while being deformed under torsion by means of relative displacement of the one side in the axial direction and the other side in the axial direction, a pre-tensioner positioned at the other side in the axial direction of the spool and configured to generate rotating drive force for rotating the spool in a retracting direction of the seat belt in a condition of rapid deceleration of a motor vehicle, and a locking device capable of locking the other side in the axial direction of the torsion bar so that a rotation of the spool in a withdrawal direction of the seat belt is suppressed at both an operating time of the pre-tensioner and a non-operating time of the pre-tensioner.

In the first aspect of the present invention, the pre-tensioner is operated corresponding to the rapid deceleration of the motor vehicle at a time of rapid deceleration thereof, and the spool is rotated in the retracting direction of the seat belt via the torsion bar by means of the rotating drive force. This results in improving restraining force for restraining the occupant by means of the seat belt. Thereafter, although the occupant's body pulls the seat belt with predetermined force or more by means of inertia at the time of rapid deceleration of the motor vehicle, and the force in a withdrawal direction of the seat belt is strongly affected to the spool, the aforementioned locking device locks the other side in the axial direction of the torsion bar on the fixing side member of the motor vehicle at the time of rapid deceleration of the motor vehicle. Thereby, the one side of the torsion bar in the axial direction and the spool connected thereto cause a relative rotation displacement to the other side in the axial direction of the torsion bar, and the energy of movement of the occupant can be absorbed (EA mechanism) by means of a deformation under torsion of the torsion bar. Further, since the pre-tensioner is positioned at the other side of the spool, an operation of the EA mechanism where the one side of the torsion bar performs a relative rotation while being twisted against the other side as described above, can secure a stable operation without receiving an influence of the operation of the aforementioned pre-tensioner.

In a manner as described above, the one side in the axial direction of the torsion bar and the spool connected thereto can be released by locking only the other side in the axial direction of the torsion bar because of the deformation under torsion of the torsion bar at the time of rapid deceleration of the motor vehicle. Accordingly, a stable EA operation can be secured without receiving the influence of the operation of aforementioned pre-tensioner.

On the other hand, the other side in the axial direction of the torsion bar can be locked by means of the locking device in a manner so as to suppress a rotation of the spool in the retracting direction of the seat belt at both the operating time and the non-operating time of the pre-tensioner. Namely, even at the time of a slight collision, slow deceleration of the motor vehicle, or the like where the pre-tensioner is not operated, the rotation of the spool connected to the one side of the torsion bar via the torsion bar in the withdrawal direction of the seat belt can be suppressed by locking the other side in the axial direction of the torsion bar by means of the locking device. As a result, when a load applied to the torsion bar by means of inertia force of the occupant's body is relatively small, a withdrawing operation for the seat belt is locked, and when the load applied to the torsion bar is relatively large, the energy of movement of the occupant is absorbed by means of the aforementioned EA mechanism.

Thus, according to the first aspect of the present invention, not only at the operating time of the pre-tensioner, even at the time of the slight collision or the like when the pre-tensioner is not operated, the energy of movement of the occupant can be absorbed by operating the EA mechanism. Accordingly, safety of the occupant can be improved.

A preferred embodiment is characterized in that in the aforementioned seat belt retractor, the seat belt retractor includes a locking member disposed at the other side in the axial direction of the spool and connected to the other side in the aforementioned axial direction of the aforementioned torsion bar, and the locking device locks the other side in the axial direction of the aforementioned torsion bar by locking the aforementioned locking member on a fixing side member of the aforementioned motor vehicle with a hooking member at the non-operating time of the aforementioned pre-tensioner.

In this embodiment of the present invention, the other side in the axial direction of the torsion bay is locked by hooking the locking member on the fixing side member of the motor vehicle with the hooking member at the time of the slight collision, the slow deceleration of the motor vehicle, or the like when the pre-tensioner is not operated. By limiting a rotation of the locking member using the hooking member as described above, the other side in the axial direction of the torsion bar can securely be locked. As a result, a rotation of the spool connected to the one side via the torsion bar in the withdrawal direction of the seat belt can be suppressed. Thereby, even in the non-operating time of the pre-tensioner at the time of the slight collision or the like, the energy of movement of the occupant can be absorbed by operating the EA mechanism. Accordingly, the safety of the occupant can further be improved.

Another preferred embodiment is characterized in that in the aforementioned seat belt retractor, in the operating time of the aforementioned pre-tensioner, the aforementioned locking device locks the other side in the axial direction of the torsion bar by keeping pressure generated by the aforementioned pre-tensioner to suppress a rotation of the other side in the aforementioned axial direction of the aforementioned torsion bar in the withdrawal direction of the seat belt for a predetermined period.

In this embodiment of the present invention, in the operating time of the pre-tensioner, the other side in the axial direction of the torsion bar is locked by keeping the pressure generated in the pre-tensioner. Thereby, even when a joint pin is ruptured by that the deformation under torsion is generated in the torsion bar at the operating time of the pre-tensioner, the other side in the axial direction of the torsion bar can securely be locked. Thereby, the energy of movement of the occupant can be absorbed by operating the EA mechanism at the operating time of the pre-tensioner.

Yet another preferred embodiment of the invention is characterized in that in the aforementioned seat belt retractor, the aforementioned hooking member is a pawl rotatably provided in the aforementioned locking member, and the aforementioned locking device locks the aforementioned locking member by rotating the aforementioned pawl in a locking direction by means of a locking gear disposed at one side in the axial direction of the aforementioned spool via a joint pin.

Thereby, the other side in the axial direction of the torsion bar can securely be locked by limiting the rotation of the locking member using the pawl.

A further preferred embodiment of the invention is characterized in that in the aforementioned seat belt retractor, the aforementioned joint pin is configured to be ruptured when a deformation under torsion is generated in the aforementioned torsion bar, and the seat belt retractor includes a urging device for urging the aforementioned pawl in an unlocking direction where a locking operation for the aforementioned locking member is not performed when the aforementioned joint pin is ruptured, and for allowing the aforementioned pawl to move in the aforementioned locking direction where the aforementioned locking member is locked by means of centrifugal force against the urging force when the seat belt is withdrawn at a predetermined speed or more.

In this embodiment of the present invention, in a case that the occupant pulls out the seat belt at a usual speed for wearing the seat belt, after the joint pin is ruptured due to a collision or the like, the seat belt can usually be withdrawn because the pawl is urged in the unlocking direction by means of the urging device. On the other hand, in a case that the seat belt is withdrawn at a predetermined speed or more in a case that the motor vehicle is again in collision, or the like, the pawl moves in the locking direction, the locking member is locked, and the withdrawing operation for the seat belt is locked. Thus, according to the present invention, even after the EA mechanism is once operated due to the collision or the like, and the joint pin is thereby ruptured, a minimum function of the seat belt, such as the locking operation for locking the withdrawing operation for the seat belt or the like at the time of collision, can be secured. As a result, the safety of the occupant, for example, during the time for the motor vehicle to be moved from a place of accident to the other place (for example, a detail shop or the like) from a place of the accident can be secured.

A preferred embodiment of the invention is characterized in that in the aforementioned seat belt retractor, the seat belt retractor includes a deceleration detecting device for detecting deceleration of the motor vehicle, and the aforementioned locking device locks the other side in the axial direction of the aforementioned torsion bar when the predetermined deceleration or more is detected by means of the aforementioned deceleration detecting device.

Thereby, even at the non-operating time of the pre-tensioner in the slight collision or the slow deceleration of the motor vehicle or the like, the other side in the axial direction of the torsion bar can be locked by means of the locking device.

Another preferred embodiment of the invention is characterized in that the seat belt retractor includes the aforementioned deceleration detecting device at one side in the aforementioned axial direction of the aforementioned spool.

Thereby, a construction of a disposition, in which the deceleration detecting device is disposed at a side opposite to the pre-tensioner, and the locking member is locked by means of the pawl disposed at a pre-tensioner side via the joint pin, can be formed. As a result, a balance (weight, space) at both sides in the axial direction of the seat belt retractor can be improved, and the mounting property of the seat belt retractor on the motor vehicle can be improved.

So as to achieve the aforementioned object, according to a second aspect of the invention, a seat belt apparatus is characterized in including a seat belt retractor according to the aforementioned seat belt retractor, a seat belt retracted by the seat belt retractor in a manner so as to be capable of being withdrawn, and restraining the occupant, a tongue provided on the aforementioned seat belt, and a buckle device for an occupant to wear the aforementioned seat belt by being latched with the tongue.

### Advantages

According to the present invention, a stable EA operation that does not receive influence of an operation of a pre-tensioner can be secured.

### Brief Description of the Drawings

Fig. 1 is a front elevation illustrating an entire structure of the seat belt apparatus provided with a seat belt retractor according to the present embodiment together with an occupant;
Fig. 2 is a longitudinal cross-sectional view illustrating an entire schematic structure of the seat belt retractor according to the present embodiment;
Fig. 3 is a perspective view illustrating an entire structure of a spool and a joint pin;
Fig. 4 is a view illustrating a condition where a pawl is moved to an unlocking direction, and is a view illustrating a condition where the pawl is moved to a locking direction;
Fig. 5 is a cross-sectional view of a pre-tensioner along a V-V line in Fig. 2, and is a view illustrating a condition before the pre-tensioner is operated;
Fig. 6 is a cross-sectional view of the pre-tensioner along the V-V line in Fig. 2, and is a view illustrating a condition just after the pre-tensioner is operated;
Fig. 7 is a view explaining an operation of the seat belt retractor in an ordinary time;
Fig. 8 is a view explaining a retracting operation for a seat belt by means of the operation of the pre-tensioner in the operations of the seat belt retractor in a rapid deceleration of a motor vehicle; and
Fig. 9 is a view explaining a withdrawing operation for the seat belt by means of an EA mechanism in the operations of the seat belt retractor in the rapid deceleration of the motor vehicle.

### Best Mode for Carrying Out the Invention

Hereinbelow, an embodiment of the present invention will be explained with reference to the drawings. The present embodiment is an example where the present invention is applied to a seat belt apparatus of an automobile.

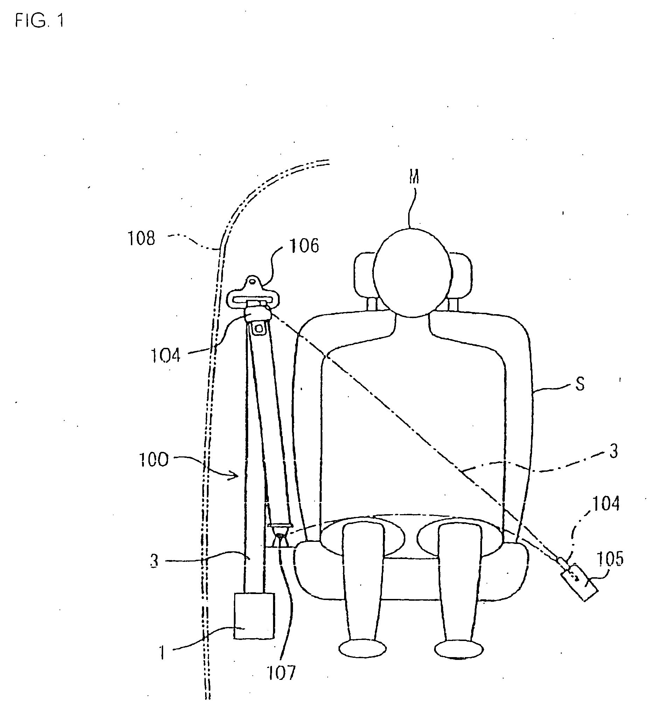

Fig. 1 is a front elevation illustrating an entire structure of a seat belt apparatus provided with a seat belt retractor according to the present embodiment together with an occupant.

In Fig. 1, a seat belt apparatus 100 is disposed in a vehicle body 108 of a motor vehicle, and is provided with a seat belt 3 for restraining an occupant M in a seat S, a seat belt retractor 1 for retracting one side of the seat belt 3 in a manner capable of being withdrawn, a tongue 104 slidably provided on the seat belt 3, and a buckle device or buckle apparatus 105 for being latched with the tongue 104.

One side of the seat belt 3 is retracted by the seat belt retractor 1 as described above, and a middle portion of the seat belt 3 is inserted into a shoulder anchor 106. An end portion of the other side of the seat belt 3 is rotatably connected to a motor vehicle 108 side by a clamp 107.

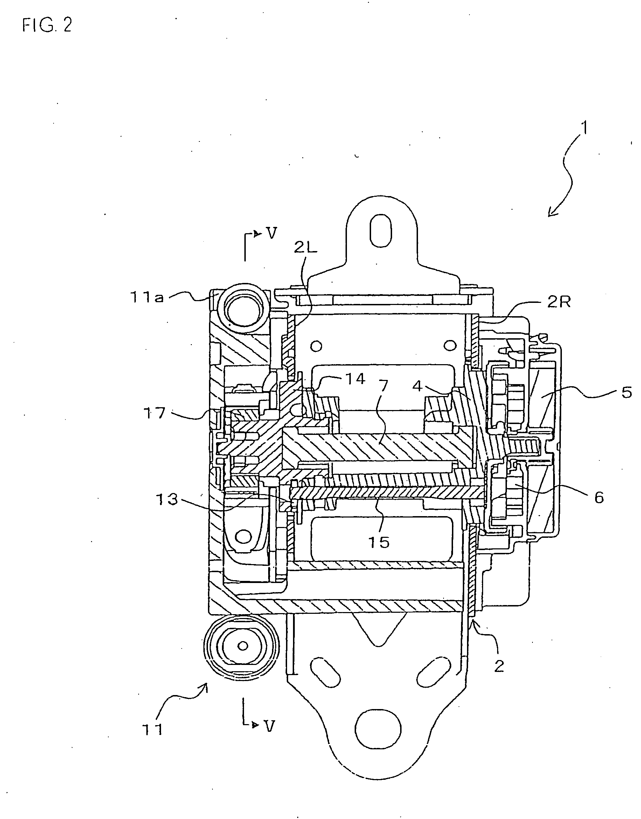

Fig. 2 is a longitudinal cross-sectional view illustrating an entire schematic structure of the seat belt retractor 1 according to the present embodiment.

In Fig. 2, the seat belt retractor 1 includes two parallel side walls 2L and 2R, a C-shaped frame 2 (fixing side member) having a rear face wall (not shown) combining the two walls in a manner so as to bridge the same, and a spool 4 for retracting the seat belt 3 (not shown in Fig. 2) while being rotatably supported between both side walls 2L and 2R of the frame 2. The seat belt retractor 1 further includes a deceleration detecting device (not shown) that is operated when detecting slow deceleration of the motor vehicle, which occurs in slight collision of the motor vehicle or the like, provided at one side (right side in Fig. 2) in an axial direction of the spool 4, and a locking gear (locking device) 6 for suppressing at least a rotation of the spool 4 in the belt withdrawal direction while being operated by the deceleration detecting device, which is provided at one side (right side in Fig. 2) in the axial direction of the spool 4. The seat belt retractor 1 further includes a torsion bar 7 that is loosely fitted on and penetrated through an inside in a radial direction of the spool 4 in the axial direction, in which one side in the axial direction (right side in Fig. 2) of the torsion bar 7 is connected to the spool 4 in a manner so as to be capable of allowing a relative rotation displacement with the spool 4 at a predetermined amount (described later in detail), and which deformation under torsion occurred due to a relative displacement between one side and the other side (left side in Fig. 2) in the axial direction is allowed, and is thereby capable of absorbing energy of movement of the occupant M. The seat belt retractor 1 further includes a spiral spring 5 that constantly urges the spool 4 in a seat belt retracting direction, a locking base 14 (locking member) that is rotatably supported by the frame 2 at the other side (left side in Fig. 2) of the torsion bar 7 and the spool 4, and is fixed to the other side (left side in Fig. 2) in an axial direction of the torsion bar 7, and a pawl 13 (locking device, hooking member) for locking the locking base 14 on the side wall 2L of the frame 2 corresponding to the deceleration of the motor vehicle, while being swingably held by the locking base 14. The seat belt retractor 1 further includes a pre-tensioner (locking device) 11 being positioned at the other side in the axial direction (left side in Fig. 2) of the torsion bar 7 and the spool 4, which generates rotating drive force for rotating the spool 4 in the retracting direction of the seat belt 3 by being operated at a time of rapid deceleration of the motor vehicle occurring in an emergency or the like, and transmitting the rotating drive force to the locking base 14, and a joint pin (locking device) 15 extending from a rotating shaft of the pawl 13 and reaching up to the locking gear 6 while penetrating through the spool 4.

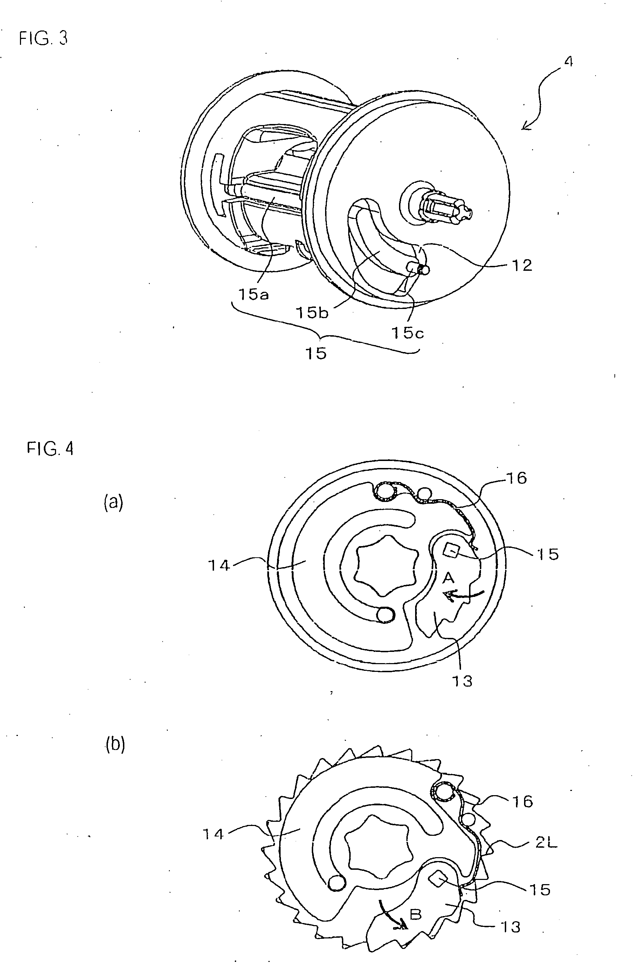

Fig. 3 is a perspective view illustrating an entire structure of the spool 4 and the joint pin 15.

In Fig. 3, the joint pin 15 includes a shaft portion 15a extending from a rotating shaft of the pawl 13 (not shown in Fig. 3) up to one side in the axial direction (front right side in Fig. 3) of the spool 4 while penetrating the spool 4, an arm portion 15b provided at an end portion of one side of the shaft portion 15a in the axial direction of the spool 4, and an operating pin 15c provided at a tip end portion of the arm portion 15b in a manner so as to be protruding toward one side in the axial direction of the spool 4. Incidentally, the shaft portion 15a of the aforementioned joint pin 15 is configured to be ruptured when the deformation under torsion occurs in the torsion bar 7 (described later in detail). By such a configuration as described above, the arm portion 15b is formed to be swingable around the shaft portion 15a as a center in an opening portion 12 provided at the one side in the axial direction of the spool 4. The pawl 13 connected to an opposite side is moved in a locking direction where the locking base 14 is locked on the side wall 2L of the frame 2, or in an unlocking direction where the locking base 14 is not locked on the side wall 2L of the frame 2 along the swing of the arm portion 15b.

The movement of the aforementioned pawl 13 in the locking direction or the unlocking direction is performed by swinging the arm portion 15b with the locking gear 6 (not shown in Fig. 3). The locking gear 6 is similar to heretofore known locking gear of this kind. At the time of the slow deceleration of the motor vehicle, the operating pin 15c is moved to an outer peripheral side by means of the aforementioned deceleration detecting device, and the pawl 13 protrudes out in an outer peripheral direction more than the spool 4. This forms a locking condition. Thereby, the pawl 13 is hooked on (meshed with) an inner tooth of the side wall 2L of the frame 2, and a rotation of the spool 4 in the withdrawal direction of the seat belt 3 is suppressed (refer to Fig. 4(b) described later). Further, when the motor vehicle is stopped and is brought to a stable condition thereafter, the locking gear 6 returns the operating pin 15c to an inner periphery side and releases the locking condition of the pawl 13.

Fig. 4(a) and Fig. 4(b) are views illustrating operations of the pawl 13 described above, in which Fig. 4(a) is a view showing a condition where the pawl 13 is moved in the unlocking direction, and Fig. 4(b) is a view showing a condition where the pawl 13 is moved to the locking condition.

In an ordinary operation, namely when the slow deceleration of the motor vehicle is not detected by means of the aforementioned deceleration detecting device, the locking gear 6 is driven toward the unlocking side, and thereby the arm portion 15b of the joint pin 15 swings toward the unlocking side (the inside in the radial direction of the spool 4) via the operating pin 15c hooked on the locking gear 6. As a result, as shown in Fig. 4(a), the pawl 13 connected to the other side in the axial direction of the joint pin 15 is moved in the unlocking direction (a direction indicated by an arrow A in the drawing) where the locking base 14 is not locked on the side wall 2L of the frame 2. Thereby, the locking base 14 is brought to a freely rotatable condition together with the spool 4. For example, the occupant M can withdraw the seat belt 3 from the retractor 1 when wearing the seat belt 3.

Incidentally, in the locking base 14, a spring 16 (urging device) for urging the pawl 13 in the unlocking direction is provided. The spring 16 urges the pawl 13 in the unlocking direction when the EA mechanism is operated and the torsion bar 7 is deformed under torsion resulting in rupturing of the joint pin 15. The spring 16 allows the pawl 13 to move in the locking direction by centrifugal force resisting against the urging force when the seat belt 3 is withdrawn at a predetermined speed or more (described later in detail).

On the other hand, at the time of deceleration or a collision of the motor vehicle, namely in a case that the slow deceleration of the motor vehicle is detected by the aforementioned deceleration detecting device, the locking gear 6 is driven toward the locking side. Thereby, the arm portion 15b of the joint pin 15 swings toward the locking side (outside in the radial direction of the spool 4) via the operating pin 15c hooked on the locking gear 6. As a result, as shown in Fig. 4(b), the pawl 13 connected to the other side in the axial direction of the joint pin 15 is moved in the locking direction (in a direction indicated by an arrow B in the drawing) where the locking base 14 is locked to the side wall 2L of the frame 2. Thereby, the locking base 14 is locked in a condition where the rotation in the belt withdrawal direction, together with the spool 4. As a result, for example, at the time of the deceleration or a collision of the motor vehicle, a withdrawing operation for the seat belt 3 from the retractor 1 is locked and the quick movement of the occupant M's body is restrained.

Incidentally, although the pawl 13 is constantly urged in the unlocking direction by means of the aforementioned spring 16, in the aforementioned deceleration or collision of the motor vehicle, the pawl 13 is moved in the locking direction resisting against the urging force of the spring 16 by means of the locking gear 6.

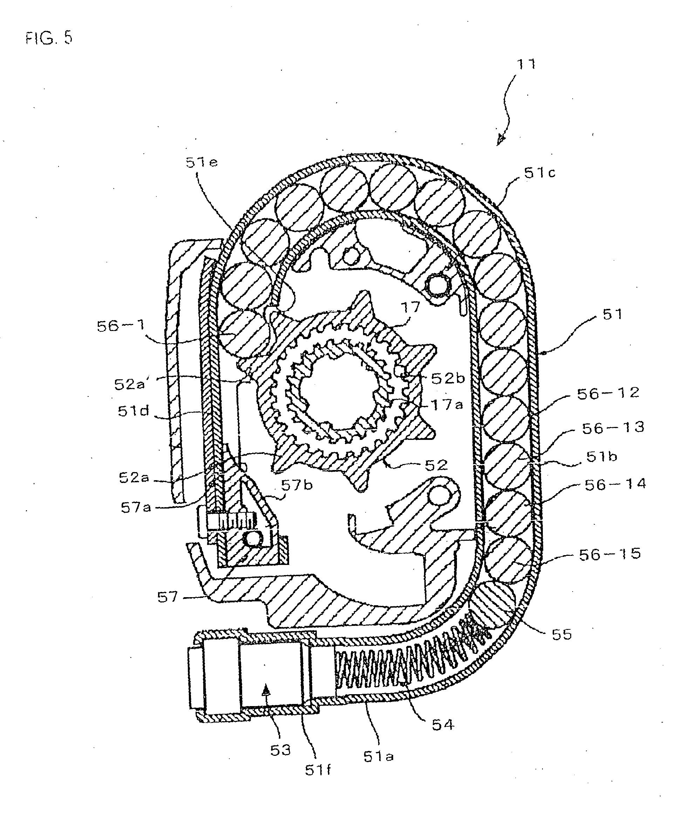

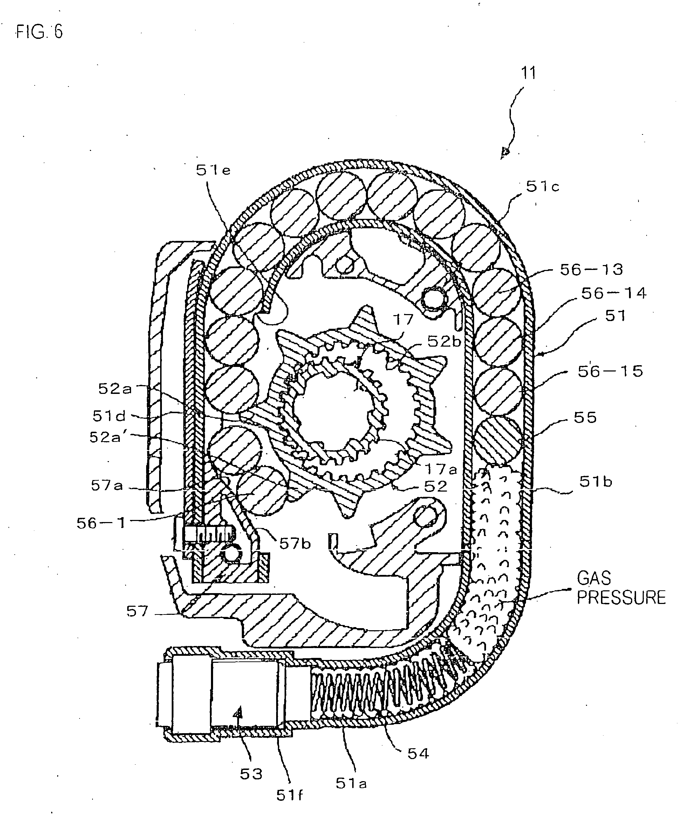

Fig. 5 and Fig. 6 are cross-sectional views of the pre-tensioner along V-V line in Fig. 2, in which Fig. 5 is a view showing a condition before the pre-tensioner 11 is operated and Fig. 6 is a view showing a condition just after the pre-tensioner 11 is operated.

In these Fig. 5 and Fig. 6, the pre-tensioner 11 includes a pipe (pipe line) 51 attached to an outside of the side wall 2L of the frame 2 while being inflected into approximately C-shape, a ring gear 52 disposed at an inner periphery side of the pipe 51, a gas generator 53 provided in a base end portion (an end portion at a lower side in Figs. 5 and 6) 51 a of the pipe 51, and a coil spring 54 connected to the gas generator 53 in an inside of the pipe 51. The pre-tensioner 11 further includes one piston ball 55 disposed in the inside of the pipe 51 so as to be in contact with the coil spring 54, a plurality of (15 in number in this example) balls 56 disposed in the inside of the pipe 51 while moving up to a gas generator 53 side in turn from the piston ball 55, and a guide block 57 attached to an inside of an end portion at a side opposite to a base end portion 51 a of the pipe 51.

The pipe 51 is formed by bending a steel pipe into approximately ellipse-like C-shape for example, and is attached in a condition being sandwiched between the side wall 2L of the frame 2 and a pre-tensioner cover 11 a (refer to Fig. 2). The pipe 51 is inflected from the base end portion 51 a at a lower part in Fig. 5 and Fig. 6 to upper right at an angle of about 90° and is connected to a straight line portion 51b. Further, the pipe 51 is connected to a half circle portion 51c at an upper part in Fig. 5 and Fig. 6. A tip end of the half circle portion 51c is connected to a straight line portion 51d directed to a lower part in Fig. 5 and Fig. 6. A cutout portion 51e is formed at a side surface of an inner periphery side of the straight line portion 51d. At an inner periphery side of the cutout portion 51e, an outer tooth 52a (outer tooth 52a' described later) of the ring gear 52 is intruding.

The ring gear 52 is held at a home position at the inner periphery side of the pipe 51 by means of a plurality of shear pins (not shown) formed in the pre-tensioner cover 11a (refer to Fig. 2). Further, at an inner periphery side of the ring gear 52, a pinion 17 fixed to the aforementioned locking base 14 is disposed.

In an inner peripheral surface of the ring gear 52, an inner tooth 52b that can be meshed with an outer tooth 17a of the pinion 17 is formed. Since the inner peripheral diameter of the ring gear 52 is formed to be greater than an outer peripheral diameter of the pinion 17, a sufficient clearance is secured between the inner tooth 52b of the ring gear 52 and the outer tooth 17a of the pinion 17 so that both of the inner tooth 52b and the outer tooth 17a cannot be meshed with each other in a condition before the pre-tensioner 11 is operated as shown in Fig. 5. Accordingly, in an ordinary time, the spool 4 can freely be rotated regardless of existence of the pre-tensioner 11. This is a condition that a clutch mechanism composed of the ring gear 52 and the pinion 17 is being cut out.

On an outer peripheral surface of the ring gear 52, a plurality of (seven in number in an illustrated example) projection-shaped outer teeth 52a, which is overhanging outward, are formed. Although the respective outer teeth 52a are lined up at intervals for two balls 56 to be able to be sandwiched, along a peripheral direction of the ring gear 52, only a space between two outer teeth 52a' adjoining each other at a certain place is offsetted in an interval for only one ball 56 to be able to be sandwiched. In a condition before the pre-tensioner 11 is operated, as shown in Fig. 5, the offsetted two outer teeth 52a' are intruding into the cutout portion 51e of the straight line portion 51d of the pipe 51. Further, the head side ball 56 in the pipe 51 is previously sandwiched between these two outer teeth 52a' and is in contact with the same.

At a base end portion 51 a of the pipe 51, a gas generator housing portion 51f which is slightly thicker than the pipe 51 is formed. In the gas generator housing portion 51f, a gas generator 53 is housed. The gas generator 53 is fixed by swaging the flange portion from outside after the gas generator 53 is housed in the gas generator housing portion 51f. This gas generator 53 ignites gunpowder corresponding to a signal transmitted from a rapid deceleration detecting device, though not shown, at the time of rapid deceleration of the motor vehicle occurring in the emergency or the like. The gas generator 53 supplies blowing-out gas pressure into the pipe 51, as shown in Fig. 6. The pipe 51 is constructed to have high airtightness in which the blown-out gas cannot be leaked out, from the gas generator housing portion 51f at the base end portion 51 a to the cutout portion 51e at the other end portion.

In the condition before the pre-tensioner 11 is operated, as shown in Fig. 5, the coil spring 54, the piston ball 55, and the fifteen balls 56 are housed in turn from the gas generator 53 side, in the inside of the pipe 51. The ball 56 is a spherically shaped element made of metal such as steel or the like. An outer diameter of each of the balls 56 is formed to be slightly smaller than an inner diameter of the pipe 51, and thereby each of the balls 56 can relatively smoothly move in the inside of the pipe 51. Further, the head side ball 56-1 is in contact with two offsetted outer teeth 52a' of the ring gear 52.

The piston ball 55 is made of resin such as silicone rubber or the like. The piston ball 55 is configured to be able to move while being in sliding contact with a pipe- inner surface of the pipe 51 in an airtight manner by being deformed and expanded after the blowing-out gas is discharged. The piston ball 55 serves as the seal for preventing the gas from being leaked to the head side. In the condition before the pre-tensioner 11 is operated, shown in Fig. 5, the coil spring 54 is disposed between the gas generator 53 and the piston ball 55, and the piston ball 55 is urged in a direction headed for an opposite end portion of the pipe 51 by the coil spring 54. By means of the urging force of the coil spring 54, the head side ball 56-1 is in contact with two offsetted outer teeth 52a' of the ring gear 52.

At an end portion of the straight line portion 51d of the pipe 51, the guide block 57 is attached. The guide block 57 has a cylindrical shape where the tip end thereof is obliquely cut, and the oblique surface serves as a guide surface. The guide surface is composed of a first guide surface 57a and a second guide surface 57b. The first guide surface 57a is formed into an arc shape which is approximately concentric with the ring gear 52 at an upper end portion of the guide block 57. The ball 56 that is shot out from the pipe 51 collides with the first oblique surface 57a at a time when the pre-tensioner 11 is operated. On the other hand, the second guide surface 57b is formed to be a flat surface, and is configured to gradually recede from the ring gear 52.

Next, an operation of the pre-tensioner 11 having the aforementioned construction will be explained. When the pre-tensioner 11 shown in Fig. 5 is not operated (ordinary time), the ring gear 52 is held at the home position at the inner periphery side of the pipe 51 by means of a plurality of the shear pins (not shown) formed in the pre-tensioner cover 11 a (refer to Fig. 2). The ring gear 52 is not meshed with the pinion 17. Accordingly, the locking base 14 freely rotates regardless of the pre-tensioner 11.

Thereafter, when a colliding condition of the motor vehicle is detected, a signal is transmitted to the gas generator 53. By means of this signal, as shown in Fig. 6, the gas generator 53 is ignited and the blown-out gas pressure is supplied into the pipe 51. By means of the blown-out gas pressure, the piston ball 55 which is closest to the gas generator 53 is pressed first, and then a plurality of the balls 56 are pressed in turn by means of pushing force of the piston ball 55. Further, the pressing force is transmitted to the headmost ball 56-1 (the ball being in contact with the two outer teeth 52a' of the ring gear 52). Incidentally, since the piston ball 55 is deformed and expanded by means of the gas pressure at this time, a sealing function is generated between the piston ball 55 and the inner surface of the pipe 51. Thereby, the gas is not leaked to the head side. Since the pipe 51 is constructed with high airtightness, the blown-out gas for the piston ball 55 to drive the ball 56 is not leaked in a halfway as described above, and a power loss of the pre-tensioner 11 does not occur.

Then, the pressure force is applied to the ring gear 52 by means of the pressure force of the ball 56, and the shear pin (not shown) of the pre-tensioner cover 11 a is sheared. Thereby, the ring gear 52 is brought to a free state and moved to a pinion 17 side, and the inner tooth 52b of the ring gear 52 and the outer tooth 17a of the pinion 17 mesh with each other. This results in clutch-connecting condition. The ring gear 52 rotates around a concentric center axis by means of the pressure force of the ball 56 for pressing the outer tooth 52a. At a time point before the ring gear 52 starts moving, the ball 56-1 at the head side is in contact with the outer tooth 52a' of the ring gear 52 in a posture of applying rotation force thereto. Therefore, the ring gear 52 assuredly starts rotation.

Further, when the piston ball 55 and the ball 56 are pushed out in turn by receiving the blowing-out gas pressure, respective balls 56 are engaged with a valley between the outer teeth 52a of the ring gear 52 in turn. In this case, two balls 56 each are engaged with one valley of the ring gear 52. The ring gear 52 rotates counterclockwise in Fig. 6 by means of that these balls 56 are engaged with the valleys in turn. Since the outer tooth 17a of the pinion 17 and the inner tooth 52b of the ring gear 52 are meshed with each other, the rotation of the ring gear 52 is transmitted to the pinion 17, and both of the ring gear 52 and the pinion 17 rotate engaging with each other. Since the pinion 17 is fixed to the locking base 14, the locking base 14 is rotated together with the pinion 14. Incidentally, the condition, shown in Fig. 6, just after the pre-tensioner 11 is operated, is an example, and a position of the piston ball 55 in the pipe 51 varies corresponding to a relationship between a body type, posture, or the like of the occupant M and the seat belt 3.

Currently, by that an EM mechanism is operated by means of the deformation under torsion of the aforementioned torsion bar 7, a shock applied to the occupant M by means of the seat belt 3 is absorbed and eased up. Further, the blowing-out gas pressure in the pipe 51 is sufficiently maintained for a short period (for a period when an operation of the EA mechanism is needed) even after the EA mechanism is operated, and the driving force of the locking base 14 in a direction of retracting rotation is maintained. Namely, at the time of operation of the EA mechanism, a rotation in the withdrawal direction of the seat belt 3 in the locking base 14 is locked.

As described above, the locking gear 6, the joint pin 15 and the pawl 13, or the pre-tensioner 11 constitute a locking device in each of the claims.

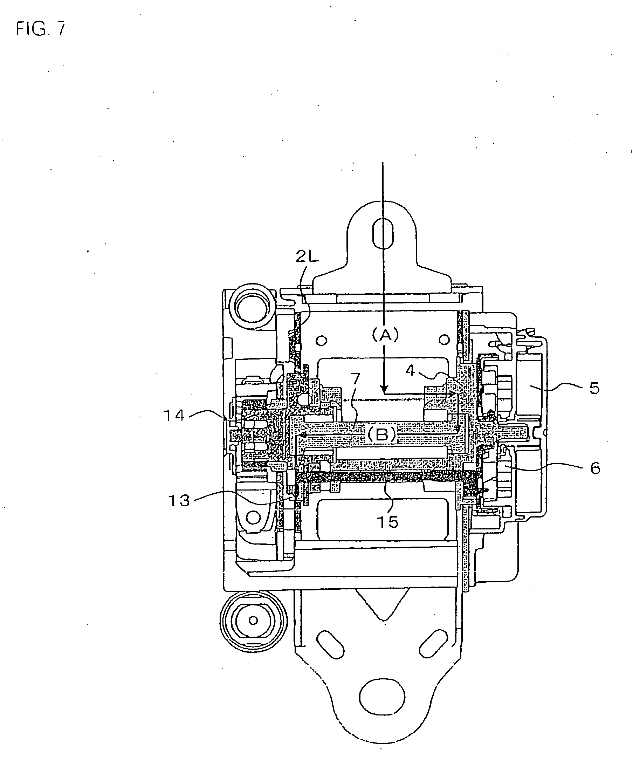

Operation and advantages of the seat belt retractor 1 of the present embodiment constructed as described above will be explained below using Fig. 7 through Fig. 9. Incidentally, arrows shown in Fig. 7 through Fig. 9 indicate a route where a load is applied.

Fig. 7 is a view explaining an operation of the seat belt retractor 1 in an ordinary time of a seat belt withdrawing operation, when the pre-tensioner is not operated.

In the ordinary time, the pawl 13 is moved in the unlocking direction by means of the locking gear 6 via the joint pin 15, in which the locking base 14 is not locked on the side wall 2L of the frame 2, and the pawl 13 is brought to an unlocking condition. Accordingly, the locking base 14, the torsion bar 7, and the spool 4 are configured to be integral with each other and to be freely rotatable. When the seat belt 3 is not worn, the seat belt 3 is completely retracted by means of urging force of the spiral spring 5.

When the seat belt 3 is withdrawn at a usual speed for wearing (refer to a mark (A) in Fig. 7), the spool 4 is rotated in the withdrawal direction of the seat belt 3, and the seat belt 3 is smoothly withdrawn. The tongue 104 that is slidably provided on the seat belt 3 is inserted and latched on the buckle device 105 fixed to the vehicle body. Thereafter, the excessively withdrawn seat belt 3 is retracted with the spool 4 by means of the urging force of the spiral spring 5, and the seat belt 3 is fitted on the occupant M to an extent of not to apply a feeling of pressure.

When the seat belt 3 is quickly withdrawn, the aforementioned deceleration detecting device is operated by large deceleration that is occurred at this time. By the operation of the deceleration detecting device, the aforementioned locking gear 6 rotates the pawl 13 in the locking direction via the joint pin 15 in a manner as described above, and hooks the same on the inner tooth of the side wall 2L of the frame 2. Thereby, the rotation force applied to the spool 4 by means of a tension load of the seat belt 3 is transmitted to the spool 4, the torsion bar 7, the locking base 14, and the pawl 13, and received by the side wall 2L of the frame 2 that is hooked with the pawl 13 (refer to a mark (B) in Fig. 7).

As a result, in a case that the load applied to the torsion bar 7 via the spool 4 by means of inertia force of the occupant M's body is relatively small, the withdrawing operation for the seat belt 3 is locked. On the other hand, in a case that the load applied to the torsion bar 7 by means of the inertia force of the occupant M's body is relatively large, the torsion bar 7 is deformed under torsion by means of the aforementioned EA mechanism, and the energy of movement of the occupant M can be absorbed. Thus, even at the time of slight collision or the like, when the pre-tensioner 11 is not operated, the energy of movement of the occupant M can be absorbed by operating the EA mechanism.

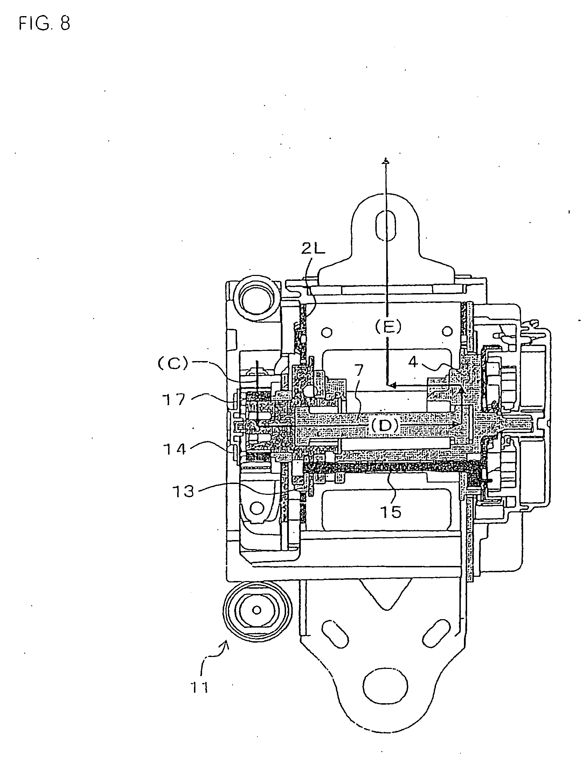

Fig. 8 is a view explaining a retracting operation for the seat belt 3 by means of the operation of the pre-tensioner 11 in the operations of the seat belt retractor 1 at the time of the rapid deceleration of the motor vehicle, i.e., a seat belt retracting operation, when the pre-tensioner is operated.

As illustrated in Fig. 8, at the time of the rapid deceleration of the motor vehicle in the emergency or the like, the pre-tensioner 11 is operated corresponding to the rapid deceleration, and the rotating drive force is transmitted to the locking base 14 via the pinion 17 (refer to a mark (C) in Fig. 8).

At this moment, in a case that the locking base 14 causes the relative rotation displacement with the spool 4 at a predetermined amount or more by means of the rotating drive force of the pre-tensioner 11, and the deformation under torsion is thereby caused in the torsion bar 7, the shaft portion 15a of the joint pin 15 is ruptured as described earlier. Thereby, the pawl 13 is released from a drive control by means of the locking gear 6. Further, the pawl 13 is moved in the unlocking direction (a direction indicated by the arrow A in Fig. 4) where the locking base 14 is not locked on the side wall 2L of the frame 2 by means of the urging force of the spring 16. As a result, the locking base 14 is brought to a state to be freely rotatable together with the spool 4 (refer to Fig. 4(a)).

Thereafter, the rotating drive force transmitted to the locking base 14 from the pre-tensioner 11 via the pinion 17 is transmitted to the spool 4 via the torsion bar 7 (refer to a mark (D) in Fig. 8). The spool 4 is rotated by a predetermined amount in the retracting direction of the seat belt 3, and the seat belt 3 is retracted by a predetermined amount (refer to a mark (E) in Fig. 8). Thereby, restraining force for the occupant M by the seat belt 3 is improved.

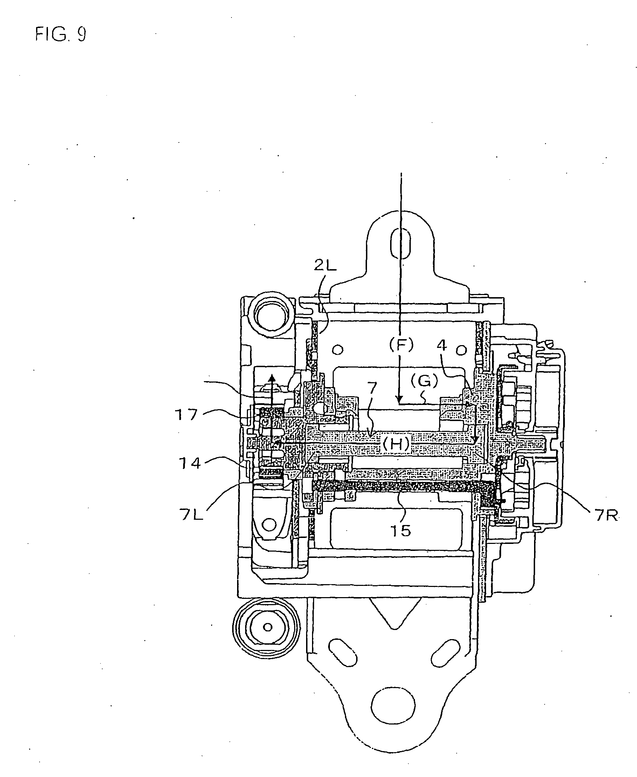

Fig. 9 is a view explaining the withdrawing operation for the seat belt 3 by means of the EA mechanism in the operations of the seat belt retractor 1 in the rapid deceleration of the motor vehicle, i.e., a seat belt withdrawing operation, when the EA mechanism is operated.

As illustrated in Fig. 9, after the retracting operation for the seat belt 3 is performed by means of operation of the pre-tensioner 11, the occupant M's body pulls the seat belt 3 at predetermined force or greater by means of the inertia force at the time of rapid deceleration of the motor vehicle (refer to a mark (F) in Fig. 9). Thereby, force in the withdrawal direction of the seat belt 3 is largely applied to the spool 4 (refer to a mark (G) in Fig. 9). This force is transmitted to the torsion bar 7 and the locking base 14 from the spool 4 (refer to a mark (H) in Fig. 9). Currently, as described above, although the locking base 14 is not locked by means of the pawl 13, the rotation of the locking base 14 in the withdrawal direction of the seat belt 3 is locked by means of the drive force of the pre-tensioner 11 in the rotating direction for retracting the seat belt 3. This is because the blowing-out gas pressure in the pipe 51 is sufficiently maintained for a short period (for a period when the operation of the EA mechanism is needed) even after the pre-tensioner 11 is operated as described earlier. Namely, the force transmitted to the locking base 14 from the aforementioned spool 4 via the torsion bar 7 is received by means of pressure-keeping force of the pre-tensioner 11 via the pinion 17 (refer to a mark (I) in Fig. 9). As a result, a part 7R at one side (right side in Fig. 9) in the axial direction of the torsion bar 7 connected to the spool 4 forms the relative rotation displacement with a part 7L at the other side (left side in Fig. 9) in the axial direction. The energy of movement of the occupant M is absorbed by means of the deformation under torsion (torque of torsion) of the torsion bar 7, and the load applied to the seat belt 3 can be limited (by means of the EA mechanism).

Incidentally, when a certain time has elapsed after the EA mechanism is operated as described above, the blowing-out gas pressure in the pipe 51 of the pre-tensioner 11 is lowered, and the locking operation by means of the pressure kept in the aforementioned pre-tensioner 11 is released. Thereby, although the locking base 14 is brought to a state to be freely rotatable with the spool 4, in a case that the seat belt 3 is withdrawn at a predetermined speed or more, the pawl 13 is moved in the locking direction by means of centrifugal force against the urging force by means of the spring 16 as described above. The withdrawing operation for the seat belt 3 is thereby locked. Thereby, even after the joint pin 15 is ruptured by that the EA mechanism is once operated, the minimum function of the seat belt 3, such as the locking operation for the withdrawing operation for the seat belt 3 at the time of collision, or the like can be secured.

According to the seat belt retractor 1 of the present embodiment explained above, since the pre-tensioner 11 is positioned at the other side in the axial direction (left side in Fig. 9) of the spool 4 as described above and is connected to the locking base 14, the operation of the EA mechanism where the part 7R of one side (right side in Fig. 9) of the torsion bar 7 performs a relative rotation with the part 7L of the other side (left side in Fig. 9) while being twisted as described above, can secure a stable operation without receiving an influence of the operation of the aforementioned pre-tensioner 11.

Further, in the seat belt retractor 1 of the present embodiment, as illustrated in Fig. 7, at the time when the pre-tensioner 11 is not operated, a rotation of the other side in the axial direction (left side in Fig. 7) of the torsion bar 7 is locked by means of the pawl 13. Thereby, even at the time of the slight collision, slow deceleration of the motor vehicle, or the like, in which the pre-tensioner is not operated, the other side of the torsion bar 7 in the axial direction (left side in Fig. 7) is locked. Further, the rotation of the spool 4 connected to one side of the torsion bar 7 via the torsion bar 7 (right side in Fig. 7) in the withdrawal direction of the seat belt 3 can be suppressed. As a result, in a case that the load applied to the torsion bar 7 by means of the inertia force of the occupant M's body is relatively small, the withdrawing operation for the seat belt 3 is locked, and in a case that the load applied to the torsion bar 7 is relatively large, the energy of movement of the occupant M is absorbed by means of the aforementioned EA mechanism. Therefore, according to the present embodiment, not only at the time when the pre-tensioner is operated, but also at the time of slight collision or the like when the pretensioner is not operated, the energy of movement of the occupant M can be absorbed by operating the EA mechanism. Consequently, safety of the occupant M can be improved.

Furthermore, specifically, the present embodiment is constructed as mentioned below. By means of that the spring 16 is provided in the locking base 14, the pawl 13 is urged in the unlocking direction where the locking base 14 is not locked when the EA mechanism is operated and the joint pin 15 is thereby ruptured, and when the seat belt 3 is withdrawn at a predetermined speed or more, the pawl 13 is allowed to move in the locking direction where the locking base 14 is locked by means of the centrifugal force against the urging force. Thereby, in a case that seat belt 3 is withdrawn by the occupant M at a usual speed for wearing the seat belt 3 after the joint pin 15 is ruptured due to a collision or the like, the seat belt 3 can be withdrawn in a usual manner because the pawl 13 is urged in the unlocking direction by means of the spring 16. On the other hand, in a case that the seat belt 3 is withdrawn at a predetermined speed or more when the motor vehicle is again in collision, or the like, the pawl 13 moves in the locking direction and thereby the locking base 14 is locked. This results in locking the withdrawing operation for the seat belt 3. Thus, according to the present embodiment, even after the EA mechanism is once operated due to a collision or the like and the joint pin 15 is ruptured, a minimum function of the seat belt 3 such as the locking operation for the withdrawing operation for the seat belt 3 in collision, or the like can be secured. As a result, the safety of the occupant M, for example, during the time for the motor vehicle to be moved from a place of accident to the other place (for example, a detail shop or the like) can be secured.

Moreover, in the present embodiment, specifically, the deceleration detecting device that is operated by detecting the slow deceleration of the motor vehicle occurring in a slight collision of the motor vehicle or the like is disposed at one side in the axial direction of the spool 4. Thereby, a construction of a disposition, in which the deceleration detecting device is disposed at a side opposite to the pre-tensioner 11, and the locking base 14 is locked by means of the pawl 13 disposed at a pre-tensioner 11 side via the joint pin 15, can be formed. As a result, a balance (weight, space) at both sides in the axial direction of the spool 4 of the seat belt retractor 1 can be improved, and the mounting property of the seat belt retractor 1 on the motor vehicle can be improved.

## Claims

1. A seat belt retractor (1) comprising:
a spool (4) for retracting a seat belt (3);
a torsion bar (7) disposed inside in a radial direction of the spool (4), wherein one side in an axial direction thereof is connected to the spool (4), and configured to be capable of absorbing energy of movement of an occupant (M) while being deformed under torsion by means of relative displacement of the one side in the axial direction and an other side in the axial direction;
a pre-tensioner (11) positioned at the other side in the axial direction of the spool (4) and configured to generate rotating drive force for rotating the spool in a retracting direction of the seat belt (3) in a condition of rapid deceleration of a motor vehicle; **characterized in that**
a locking device (6, 13, 15) capable of locking the other side in the axial direction of the torsion bar (7) so that a rotation of the spool (4) in a withdrawal direction of the seat belt (3) is suppressed at both an operating time of the pre-tensionet (11) and a non-operating time of the pre-tensioner (11).

2. The seat belt retractor (1) according to Claim 1, wherein in the operating time of the pre-tensioner (11), the locking device (6, 13, 15) locks the other side in the axial direction of the torsion bar (7) by keeping pressure generated by the pre-tensioner (11) to suppress a rotation of the other side in the axial direction of the torsion bar (7) in the withdrawal direction of the seat belt (3) for a predetermined period.

3. The seat belt retractor (1) according to Claim I or 2, including a locking member (14) disposed at the other side in the axial direction of the spool (4) and connected to the other side in the axial direction of the torsion bar (7), wherein the locking device (6, 13, 15) locks the other side in the axial direction of the torsion bar (7) by locking the locking member on a fixing side member (14) of the motor vehicle with a hooking member (13) at the non-operating time of the pre-tensioner.

4. The seat belt retractor (1) according to Claim 3, wherein the hooking member (13) is a pawl (13) rotatably provided in the locking member (14), and the locking device (6, 13, 15) locks the locking member (14) by rotating the pawl (13) in a locking direction by means of a locking gear (6) disposed at one side in the axial direction of the spool via a joint pin (15).

5. The seat belt retractor (1) according to Claim 4, wherein the joint pin (15) is configured to be ruptured when a deformation under torsion is generated in the torsion bar (7), and wherein the seat belt retractor (1) includes an urging device (16) for urging the pawl (13) in an unlocking direction where a locking operation for the locking member (14) is not performed when the joint pin (15) is ruptured, and for allowing the pawl (13) to move in the locking direction where the locking member (14) is locked by means of centrifugal force against an urging force when the seat belt (3) is withdrawn at a predetermined speed or more.

6. The seat belt retractor (1) according to any one of Claims 1 through 5, including a deceleration detecting device for detecting deceleration of the motor vehicle, wherein the locking device (6, 13, 15) locks the other side in the axial direction of the torsion bar (7) when the predetermined deceleration or more is detected by means of the deceleration detecting device.

7. The seat belt retractor (1) according to Claim 6, wherein the deceleration detecting device is provided at one side in the axial direction of the spool (4).

8. A seat belt apparatus (100) comprising:
a seat belt retractor (1) according to any one of Claims I through 7;
a seat belt (3) retracted by the seat belt retractor (1) in a manner so as to be capable of being withdrawn, and restraining the occupant (M);
a tongue (104) provided on the seat belt (3); and
a buckle device (105) for an occupant (M) to wear the seat belt (3), by being latched with the tongue (104).

## Patentansprüche

1. Sitzgurtaufrollvorrichtung (1), umfassend
eine Spule (4) zum Aufrollen eines Sitzgurts (3);
einen Drehstab (7), welcher sich in einer radialen Richtung innerhalb der Spule (4) befindet, wobei eine Seite in einer axialen Richtung davon mit der Spule (4) verbunden ist, und welcher derart ausgestaltet ist, dass er in der Lage ist, eine Bewegungsenergie eines Insassen (M) zu absorbieren während er sich durch eine Verdrehung durch einen relativen Versatz der einen Seite in der axialen Richtung gegenüber einer anderen Seite in der axialen Richtung verformt;
einen Vorspanner (11), welcher an der anderen Seite in der axialen Richtung der Spule (4) angeordnet ist und derart ausgestaltet ist, dass er eine Drehantriebskraft erzeugt, um die Spule in einer aufwickelnden Richtung des Sitzgurtes (3) bei einem schnellen Abbremsen eines Kraftfahrzeugs zu drehen;
**gekennzeichnet durch**
eine Verriegelungsvorrichtung (6, 13, 15), welche in der Lage ist, die andere Seite in der axialen Richtung des Drehstabs (7) zu verriegeln, so dass eine Drehung der Spule (4) in einer abwickelnden Richtung des Sitzgurtes (3) sowohl bei einem Betrieb des Vorspanners (11) als auch für den Fall, dass sich der Vorspanner (11) nicht im Betrieb befindet, unterdrückt wird.

2. Sitzgurtaufrollvorrichtung (1) nach Anspruch 1, **dadurch gekennzeichnet, dass** die Verriegelungsvorrichtung (6, 13, 15) bei dem Betrieb des Vorspanners (11) die andere Seite in der axialen Richtung des Drehstabes (7) verriegelt, indem ein Druck, welcher durch den Vorspanner (11) erzeugt wird, um eine Drehung der anderen Seite in der axialen Richtung des Drehstabes (7) in der abwickelnden Richtung des Sitzgurtes (3) zu unterdrücken, für eine vorbestimmte Periode gehalten wird.

3. Sitzgurtaufrollvorrichtung (1) nach Anspruch 1 oder 2, umfassend ein Verriegelungsteil (14), welches an der anderen Seite in der axialen Richtung der Spule (4) angeordnet ist und mit der anderen Seite in der axialen Richtung des Drehstabes (7) verbunden ist, wobei die Verriegelungsvorrichtung (6, 13, 15) die andere Seite in der axialen Richtung des Drehstabes (7) verriegelt, indem das Verriegelungsteil an einem Befestigungsseitenteil (2L) des Kraftfahrzeugs mit einem Hakenteil (13) verriegelt wird, wenn sich der Vorspanner nicht in Betrieb befindet.

4. Sitzgurtaufrollvorrichtung (1) nach Anspruch 3, **dadurch gekennzeichnet, dass** das Hakenteil (13) eine Sperrklinke (13) ist, welche drehbar in dem Verriegelungsteil (14) vorhanden ist, und dass die Verriegelungsvorrichtung (6, 13, 15) das Verriegelungsteil (14) verriegelt, indem die Sperrklinke (13) mittels eines Verriegelungsgetriebes (6), welches an einer Seite in der axialen Richtung der Spule vorhanden ist, über einen Verbindungszapfen (15) in eine verriegelnde Richtung gedreht wird.

5. Sitzgurtaufrollvorrichtung (1) nach Anspruch 4, **dadurch gekennzeichnet, dass** der Verbindungszapfen (15) derart ausgestaltet ist, dass er zerbricht, wenn eine Verformung aufgrund einer Verdrehung in dem Drehstab (7) erzeugt wird, und dass die Sitzgurtaufrollvorrichtung (1) eine Antriebsvorrichtung (16) aufweist, um die Sperrklinke (13) in eine entriegelnde Richtung zu drängen, wobei kein Verriegelungsvorgang bezüglich des Verriegelungsteils (14) durchgeführt wird, wenn der Verbindungszapfen (15) zerbricht, und um der Sperrklinke (13) zu ermöglichen, sich in die verriegelnde Richtung zu bewegen, wobei das Verriegelungsteil (14) durch eine Zentrifugalkraft gegen eine Antriebskraft verriegelt wird, wenn der Sitzgurt (3) mit einer vorbestimmten Geschwindigkeit oder mehr abgewickelt wird.

6. Sitzgurtaufrollvorrichtung (1) nach einem der Ansprüche 1 bis 5, umfassend eine Abbremserfassungsvorrichtung, um ein Abbremsen des Kraftfahrzeugs zu erfassen, wobei die Verriegelungsvorrichtung (6, 13, 15) die andere Seite in der axialen Richtung des Drehstabes (7) verriegelt, wenn mittels der Abbremserfassungsvorrichtung der vorbestimmte Abbremswert oder mehr erfasst wird.

7. Sitzgurtaufrollvorrichtung (1) nach Anspruch 6, **dadurch gekennzeichnet, dass** die Abbremserfassungsvorrichtung an einer Seite in der axialen Richtung des Spule (4) vorhanden ist.

8. Sitzgurtvorrichtung (100), umfassend:
eine Sitzgurtaufrollvorrichtung (1) nach einem der Ansprüche 1 bis 7;
einen Sitzgurt (3), welcher durch die Sitzgurtaufrollvorrichtung (1) in einer Weise aufgewickelt wird, so dass er abgewickelt werden kann, und welcher den Insassen (M) zurückhält;
eine Zunge (104), welche an dem Sitzgurt (3) vorhanden ist; und
eine Gurtschlossvorrichtung (105) für einen Insassen (M), um den Sitzgurt (3) zu tragen, indem die Zunge (104) eingeklinkt wird.

## Revendications

1. Rétracteur (1) de ceinture de sécurité comprenant :
une bobine (4) pour rétracter une ceinture (3) de sécurité ;
une barre de torsion (7) disposée selon une direction radiale à l'intérieur de la bobine (4), un côté selon une direction axiale de la barre étant relié à la bobine (4), et configurée pour être capable d'absorber de l'énergie de déplacement d'un occupant (M) tout en étant déformée sous un effet de torsion au moyen d'un déplacement relatif du dit côté selon la direction axiale par rapport à un autre côté selon la direction axiale ;
un pré-tendeur (11) situé au dit autre côté selon la direction axiale de la bobine (4) et configuré pour engendrer une force d'entraînement rotatif pour faire tourner la bobine selon une direction de rétractation de la ceinture (3) de sécurité dans une condition de décélération rapide d'un véhicule automobile ; **caractérisé en ce que**
un dispositif de verrouillage (6, 13, 15) capable de verrouiller le dit autre côté selon la direction axiale de la barre (7) de torsion de sorte qu'une rotation de la bobine (4) selon une direction de retrait de la ceinture (3) de sécurité est supprimée à la fois à un moment de fonctionnement du pré-tendeur (11) et à un moment de non-fonctionnement du pré-tendeur (11).

2. Le rétracteur (1) de ceinture de sécurité selon la revendication 1, dans lequel, pendant le fonctionnement du pré-tendeur (11), le dispositif de verrouillage (6, 13, 15) verrouille ledit autre côté selon la direction axiale de la barre de torsion (7) par maintien de la pression engendrée par le pré-tendeur (11) afin de supprimer une rotation dudit autre côté selon la direction axiale de la barre de torsion (7) dans la direction de retrait de la ceinture (3) de sécurité pour une période prédéterminée.

3. Le rétracteur (1) de ceinture de sécurité selon la revendication 1 ou 2, comprenant un organe de verrouillage (14) disposé audit autre côté selon la direction axiale de la bobine (4) et relié audit autre côté selon la direction axiale de la barre de torsion (7), le dispositif de verrouillage (6, 13, 15) verrouillant ledit autre côté selon la direction axiale de la barre de torsion (7) par verrouillage de l'organe de verrouillage sur un organe (14) de fixation latéral du véhicule automobile avec un organe formant crochet (13) à un moment de non-fonctionnement du pré-tendeur.

4. Le rétracteur (1) de ceinture de sécurité selon la revendication 3, dans lequel l'organe formant crochet (13) est un cliquet (13) prévu de façon rotative dans l'organe de verrouillage (14), et le dispositif de verrouillage (6, 13, 15) verrouille l'organe de verrouillage (14) en faisant tourner le cliquet (13) selon une direction de verrouillage au moyen d'un engrenage de verrouillage (6) disposé à un côté selon la direction axiale de la bobine par l'intermédiaire d'une goupille de liaison (15).

5. Le rétracteur (1) de ceinture de sécurité selon la revendication 4, dans lequel la goupille de liaison (15) est configurée pour être cassée lorsque une déformation sous torsion est engendrée dans la barre de torsion (7), le rétracteur (1) de ceinture de sécurité comprenant un dispositif de sollicitation (16) pour solliciter le cliquet (13) selon une direction de déverrouillage lorsqu'une opération de verrouillage pour l'organe de verrouillage (14) n'est pas effectuée quand la goupille de liaison (15) se casse, et pour permettre au cliquet (13) de se déplacer selon la direction de verrouillage quand l'organe de verrouillage (14) est verrouillé au moyen d'une force centrifuge à l'encontre d'une force de sollicitation lorsque la ceinture (3) de sécurité est extraite à une vitesse prédéterminée ou supérieure à celle-ci.

6. Le rétracteur (1) de ceinture de sécurité selon l'une quelconque des revendications 1 à 5, comprenant un dispositif de détection de décélération pour détecter une décélération du véhicule automobile, le dispositif de verrouillage (6, 13, 15) verrouillant ledit autre côté selon la direction axiale de la barre de torsion (7) lorsque la décélération prédéterminée ou une décélération supérieure à celle-ci est détectée au moyen du dispositif de détection de décélération.

7. Le rétracteur (1) de ceinture de sécurité selon la revendication 6, dans lequel le dispositif de détection de décélération est prévu à un côté selon la direction axiale de la bobine (4).

8. Un appareil (100) de ceinture de sécurité comprenant :
un rétracteur (1) de ceinture de sécurité selon l'une quelconque des revendications 1 à 7 ;
une ceinture (3) de sécurité rétractée par le rétracteur (1) de ceinture de sécurité d'une façon lui permettant d'être capable d'être retirée, et de restreindre l'occupant (M) ;
une languette (104) prévue sur la ceinture (3) de sécurité ; et
un dispositif formant attache (105) permettant à un occupant (M) de porter la ceinture (3) de sécurité, en étant bouclé au moyen de la languette (104).
